# EUROPEAN PATENT APPLICATION

(11) **EP 1 610 575 A1**
(43) Date of publication of application: **28.12.2005**
(21) Application number: 03715633.8
(22) Date of filing: 31.03.2003
(51) Int. Cl.: H04Q 7/38, H04L 12/56

(54) **RADIO COMMUNICATION NETWORK AND FLOW CONTROL METHOD**

(71) Applicant: FUJITSU LIMITED, Kawasaki-shi, Kanagawa 211-8588 (JP)
(72) Inventor: IKEDA, Eiji, Evolium Japan Limited, Yokosuka-shi, Kanagawa 239-0847 (JP); KUMAGAI, Tomonori, Evolium Japan Limited, Yokosuka-shi, Kanagawa 239-0847 (JP)
(74) Representative: HOFFMANN EITLE
(86) International application number: PCT/JP2003/004054
(87) International publication number: WO 2004/089027

(57) **Abstract**

Disclosed is a method of controlling flow between a base station controller and a base station in a wireless communication network. The base station controller, base station and a mobile station are provided with the same processing timing that is based upon the minimum receive interval of the mobile station. The base station controller sends and receives a data-transfer request frame and a data-transfer enable frame to and from the base station and performs flow control of data from the base station controller to the base station, and the base station transmits data to the mobile station at the processing timing.

## Description

### Technical Field

This invention relates to a wireless communication network, which includes at least a base station controller (Radio Network Controller: RNC), a base station (Node B) and a mobile station (User Equipment: UE), and to a flow control method. More particularly, the invention relates to wireless communication network and flow control method for performing flow control efficiently by making the processing intervals of flow control, which is implemented between the RNC and Node B, coincide.

### Background Art

### (a) HSDPA wireless communication system

A wireless communication system that employs the W-CDMA scheme has been standardized by the 3GPP (3^{rd} Generation Partnership Project) and actual service has begun in Japan as well. With 3GPP at the present time, standardization of additional functions is progressing with the aim of providing further functionality. For example, in packet communication, a study of additional functions for raising the communication rate to a maximum of 12 Mbps on the downlink (at present the maximum rate on the downlink is 2 Mbps) is being carried out under the name HSDPA (High Speed Data Packet Access).

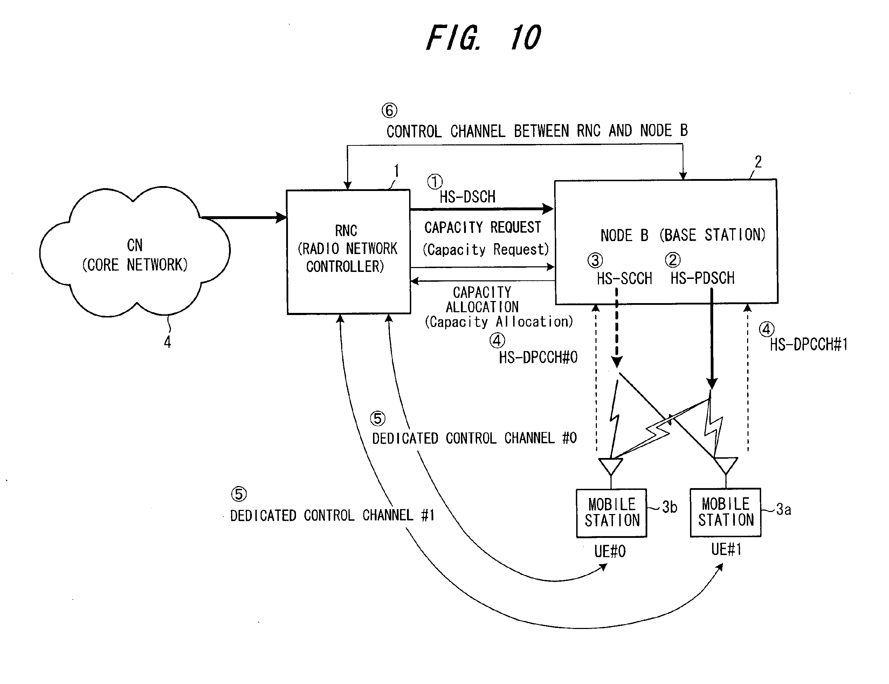

Fig. 10 is a schematic view of the configuration of an HSDPA system. A radio access system (RAN: Radio Access Network) in 3GPP comprises an RNC (Radio Network Controller) 1, a Node B (base station) 2 and UEs (User Equipment: mobile stations) 3a, 3b, ···. The RAN is connected to a CN (Core Network) 4.

With HSDPA, a ① HS-DSCH (High Speed - Downlink Shared Channel) in a wired section and a ① HS-PDSCH (High Speed - Physical Downlink Shared Channel) in a wireless section are used as packet-data transmission channels CH. HS-DSCH and HS-PDSCH are channels exclusively for the downlink and are shared by a plurality of UEs (UE #0, UE #1) 3a, 3b, ···.

In a wireless section, a HS-SCCH ③ (High Speed Shared Control Channel) is set up as a high-speed control channel, and control information for allowing the UEs 3a, 3b, ··· to receive packet data on the HS-PDSCH is transmitted. The HS-SCCH is shared by a plurality of the UEs 3a,3b, ···.

Further, in a wireless section, a ④ HS-DPCCH (High Speed Dedicated Physical Control Channel) is set up on a per-user basis. With HSDPA, data retransmission control is exercised between the Node B 2 and the UEs 3a, 3b, ···. The UEs 3a, 3b, ··· report ACK (notification of acknowledgement of reception) or NACK (notification of reception failure) with respect to the receive data to the Node B 2 using the HS-DPCCH.

A logic path (dedicated control channel) ⑤ for control is set up for every UE 3a, 3b, ··· between the RNC 1 and UEs 3a, 3b, ···. It should be noted that the data on the dedicated control channel is physically sent and received via the Node B 2. Further, the sending and receiving of control information between the RNC 1 and Node B 2 is performed via ⑥ the control channel between the RNC and Node B. In addition, in order to assure QoS (Quality of Service), flow control is carried out between the RNC 1 and Node B 2.

### (b) Mechanism for receiving HS-PDSCH packet data

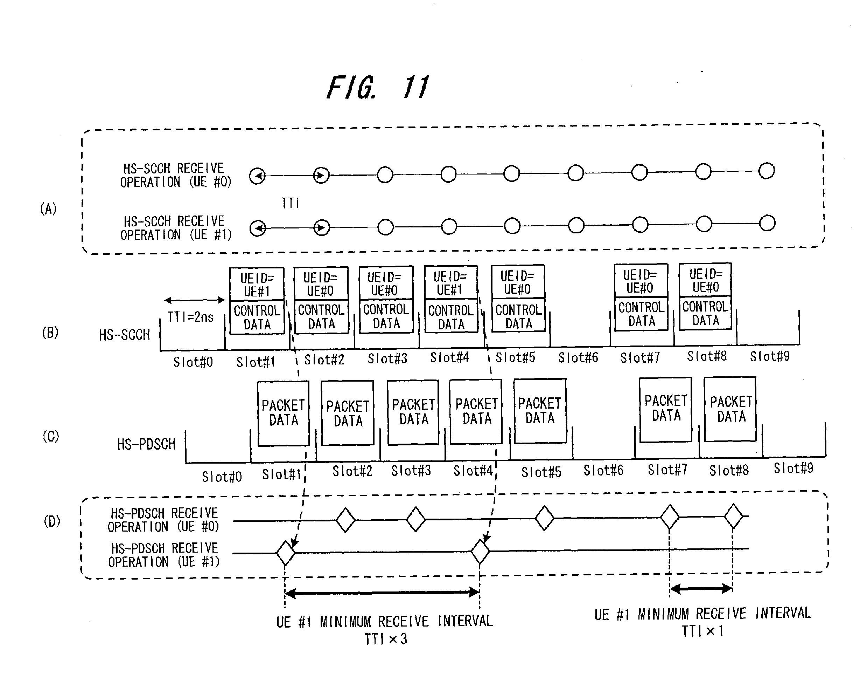

Figs. 11(A) to 11(D) are diagrams useful in describing a mechanism for receiving packet data on the HS-PDSCH.

As shown at (A) of Fig. 11, a transmit cycle referred to as a "TTI" (Transmission Time Interval = 2 ms) is set up on the HS-SCCH. Control information is transmitted in conformity with the TTI and received by UEs #0, #1 only if control information to be transmitted exists. The data transmitted on the HS-SCCH includes a user identifier (UEID: User Equipment Identifier) and various parameters (radio spectrum code, modulation scheme, data-length information, etc.) for receiving data on the HS-PDSCH.

### ·Receiving of HS-SCCH and HS-PDSCH data by UE

UE receives HS-SCCH data in all TTIs. For example, in slot #1 at (B) of Fig. 11, UE #1 and UE #2 receive the HS-SCCH data simultaneously. Each UE refers to the UEID in the data and compares it with its own ID. In this case, the UEID of the HS-SCCH data in slot #1 is "UE #1", and therefore UE #0 discards the receive HS-SCCH data and UE #1 loads the control data contained in the receive HS-SCCH data. UE #1 thenceforth extracts a parameter, which is for HS-PDSCH receive, from the control data portion, and receives the packet data on the HS-PDSCH [(C), (D) of Fig. 11].

Upon receiving data, the UE #1 refers to a "sequence number" contained in the data and checks to determine whether there is loss of data. In a case where all data could be received without loss of data, the UE #1 reports ACK to Node B using the HS-DPCCH, Further, if data has been lost, then the UE #1 reports NACK to Node B using the HS-DPCCH. Operation is similar with regard to slots #2 to #5 and slots #7 and #8. The UE #1 receives packet data via the HS-PDSCH of slots #1, #4, and the UE #0 receives packet data via the HS-PDSCH of slots #2 and #3, slot #5 and slots #7 and #8.

### ·Packet receive interval of UE

With a UE having a low receive processing capability, a case where receive data processing cannot keep up when data is received every time in every TTI is conceivable. Accordingly, it is necessary to be able to set the minimum receive interval on a per-UE basis and for the Node B to assure a transmit interval that is greater than the minimum receive interval with respect to a certain specific UE.

For example, as indicated at (D) of Fig. 11, consider a case where the minimum receive intervals of the UE #0, UE #1 are 1TTI and 3TTI, respectively. If it is assumed that a data transmission directed toward UE #1 has been performed in slot #1, the next time a transmission toward UE #1 is performed will be in slot #4, which is 3TTI later. A transmission toward UE #1 is inhibited in the intervening slots #2, #3.

### (c) Flow control

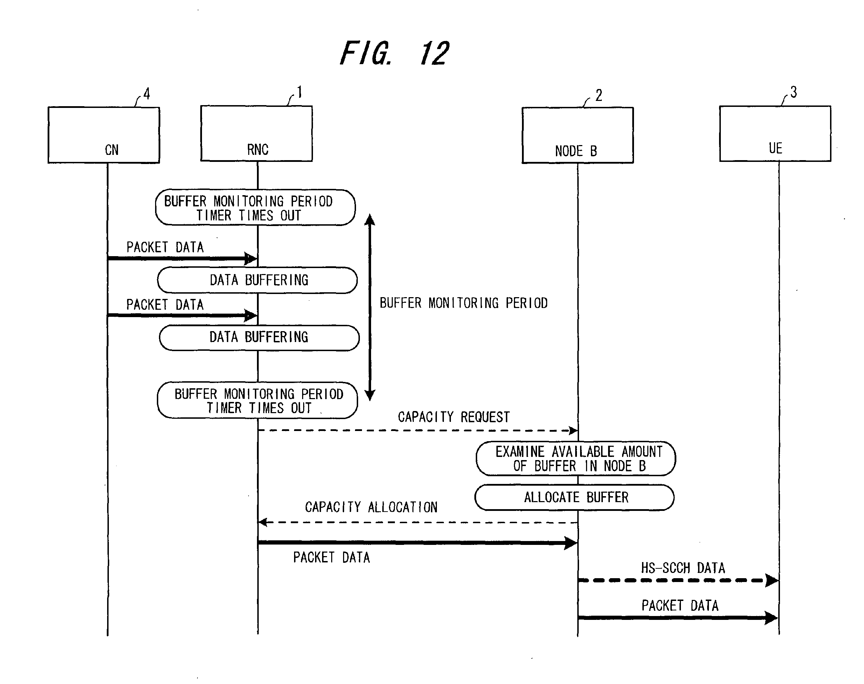

Fig. 12 is a diagram useful in describing an overview of a flow control mechanism.

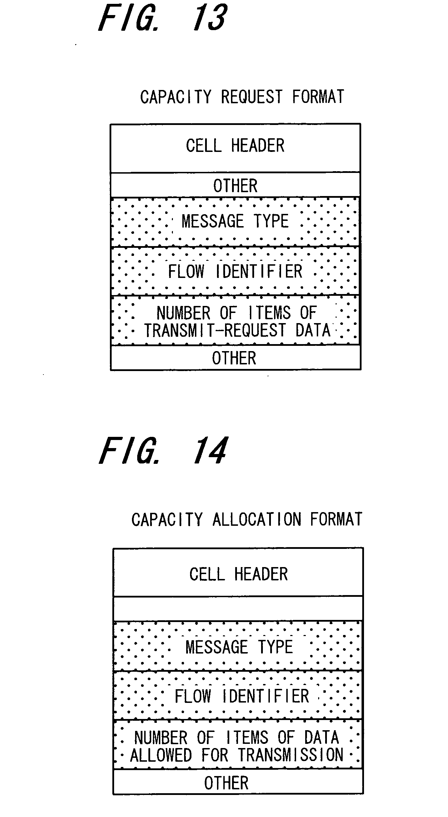

Upon receiving packet data from the CN 4, the RNC 1 buffers the packet data temporarily and transmits a request for transmission of the received packet data to Node B 2 in a control frame referred to as a "capacity request". Characteristic parameters of a capacity request are as follows, as illustrated in Fig. 13:
① Message type: represents that the type is a capacity request;
② Flow identifier: represents the "data flow" for exercising flow control (corresponds also to the user identification; and
③ Number of items of transmit-request data:
   stored in a buffer within the RNC and represents number of items of data that are to be transmitted from now onward.
It should be noted that data communication between the RNC and CN is performed using ATM cells, and it is so arranged that one or more short packets are mapped to the payload of the ATM cell. A cell header, therefore, is attached to the leading end of the frame (cell) in Fig. 13, and the above-mentioned parameters are specified by short packets.

Upon receiving a capacity request, Node B 2 examines the status of the buffer in Node B. If the buffer is empty, then Node B 2 reports the number of data items whose transmission is allowed to the RNC 1 by a control frame referred to as "capacity allocation". Characteristic parameters of capacity allocation are as follows, as illustrated in Fig. 14:
① Message type: represents that the type is capacity allocation;
② Flow identifier: represents the "data flow" for exercising flow control (corresponds also to the user identification; and
③ Number of items of data allowed for transmission: represents the number of items of data allowed to be transmitted to the RNC.

Upon receiving the capacity allocation, the RNC 1 sends the Node B 2 the buffered packet data in an amount equivalent to the number of items of data allowed. The Node B 2 subsequently transmits this packet data toward the UE 3a together with HS-SCCH data.

The above-mentioned flow control is carried out on a per-data-flow basis (on a per-mobile-station basis). In actuality, therefore, flow control operations are performed between the RNC and Node B in parallel in a number equivalent to the data flows (the number of mobile stations).

### (d) Problems

As described in Fig. 12, when the RNC 1 has received packet data from the CN 4, it buffers the data temporarily and issues a packet-data transmission request to Node B by a capacity request.

### ·Method normally implemented

With regard to an opportunity for transmission of the capacity request, assume that the RNC 1 transmits the capacity request whenever packet data is received from the CN 4. In this case, the transmission request is issued often and efficiency is poor in terms of the transmission band and computation processing resources. Normally, therefore, the RNC 1 exercises control that includes monitoring the buffer periodically, as illustrated in Fig. 12, starting up capacity request processing whenever monitoring is performed and issuing a transmit request to Node B 2 for all packet data buffered up to this point.

Such flow control, however, has the problems set forth below.

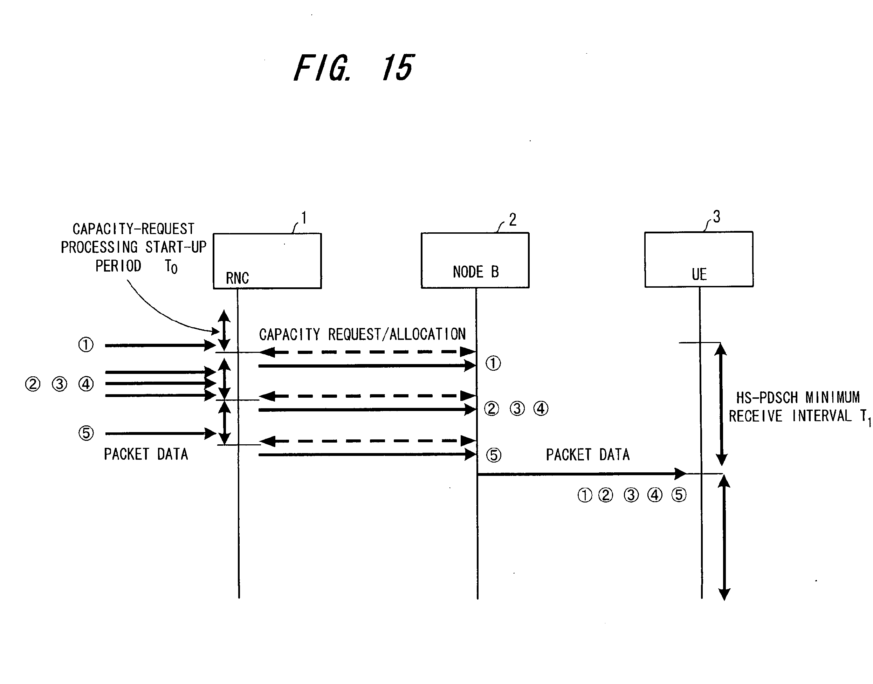

First, consider a case where a capacity-request processing start-up period T₀ of the RNC 1 is shorter than an HS-PDSCH minimum receive interval T₁ of UE 3, as shown in Fig. 15.

At every capacity-request processing start-up period T₀, the RNC 1 transmits the capacity request to Node B 2 with respect to each of the items of packet data ①, ② to ④ and ⑤, receives the capacity allocation from Node B 2 and transmits the packet data to Node B. In such case data is received by Node B 2 three times. In actuality, however, it is required that the timing at which data is transmitted to the UE 3 be made to conform the HS-PDSCH minimum receive interval T₁ of the UE. Each of these items of data, therefore, is buffered in the Node B by this timing.

Thus, in a case where the capacity-request processing start-up period T₀ in the RNC 1 and the HS-PDSCH minimum receive interval T₁ of the UE differ, data is buffered in the Node B 2 needlessly. Further, under the circumstances shown in Fig. 15, in comparison with a case where a single capacity request is transmitted from the RNC 1 with respect to all data of packets ① to ⑤, three times as many capacity requests and capacity allocations are sent and received. This not only wastes the transmission band between the RNC and Node B but also leads to waste of computation resources expended in capacity-request processing within the RNC. Furthermore, if data occupies the buffer in node B for a long period of time, a problem which arises is that the buffer will no longer be allocated to a data-transfer request (capacity request) issued subsequently by the RNC. Installing a large buffer in order to solve this problem is disadvantageous in terms of the size and cost of the apparatus.

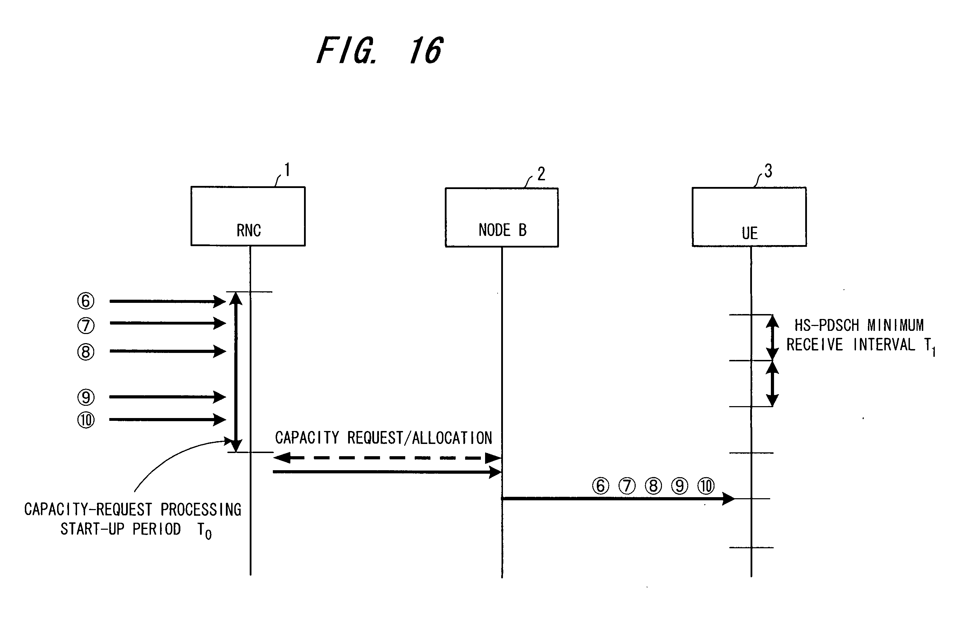

Next, consider a case where the capacity-request processing start-up period T₀ of the RNC 1 is longer than the HS-PDSCH minimum receive interval T₁ of UE 3, as illustrated in Fig. 16.

As shown in Fig. 16, the RNC 1 transmits a capacity request to Node B 2 with regard to packet data ⑥ to 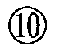 at the start-up timing of capacity-request processing, and then transmits data to Node B 2 after a capacity allocation is received. In this case, data buffering time in the RNC 1 is long regardless of the fact that the UE 3 is capable of receiving the packet data at comparatively short cycles. Consequently, the time it takes for the data that arrives first (e.g., packet data ⑥, ⑦) to actually be transferred to the UE 3 is long and arrival of data is delayed. Furthermore, if data occupies the buffer in RNC 1 for a long period of time, there is a possibility that the buffer will be inadequate. Installing a large buffer in order to solve this problem is disadvantageous in terms of the size and cost of the apparatus.

Furthermore, the HS-PDSCH minimum receive interval T₁ of UE 3 differs for every UE owing to the reception capability of the UE 3, as mentioned above. With a "fixed-period capacity-request processing start-up method" of the kind normally carried out, therefore, it is difficult to apply a capacity-request processing start-up period that is optimum for all UEs.

There is a packet switching apparatus (Patent Reference 1) that transmits multimedia information to a repeater line in a packet format and performs packet transfer in mutual fashion. With this packet switching apparatus, data information that has entered from a data terminal is stored in a buffer temporarily and is sent to the repeater line via a packet transfer unit after a transmission latency time predetermined for every type of data-information packet signal. Although this prior art implements flow control of packets, it does not relate to flow control between a base station controller and a base station in a wireless communication network that includes a base station controller, base stations and mobile stations, and it does not exercise flow control based upon the data receive interval of a mobile station.

Further, there is a data transfer rate control scheme (Patent Reference 2) that optimizes data transfer rate. This data transfer rate control scheme performs a computation for increasing or decreasing the transmit interval depending upon whether or not flow control information, which instructs that data transmission be halted, has been sent from a transmission source within a certain period, and transmits the data of the next period at a new transmit interval obtained by the result of computation. As a result, the transmit interval is changed in accordance with the conditions of flow control and the data transfer rate is optimized. Although this prior art controls the transmit interval, it does not relate to flow control between a base station controller and a base station in a wireless communication network that includes a base station controller, base stations and mobile stations, and it does not exercise flow control based upon the data receive interval of a mobile station.
· Patent Reference 1
   Japanese Patent Application Laid-Open No. 3-108843
· Patent Reference 2
   Japanese Patent Application Laid-Open No. 7-264262

Accordingly, an object of the present invention is to so arrange it that efficient flow control (capacity-request start-up control) that is aware of the HS-PDSCH minimum receive interval can be implemented.

Another object of the present invention is to so arrange it that high-quality communication can be implemented by varying the HS-PDSCH minimum receive interval dynamically depending upon a difference in various operating conditions and causing the flow-control start-up period to fall in line with the minimum receive interval.

### Disclosure of the Invention

The present invention relates to control of data flow from a base station controller to a base station in a wireless communication network that includes a base station controller, a base station and a mobile station. The base station controller sends and receives a data-transfer request frame and a data-transfer enable frame to and from the base station to thereby control flow of data to the base station, and the base station sends and receives data to an from the mobile station. The base station controller performs the flow control between itself and the base station at a prescribed processing timing, namely based upon a data receive interval of the mobile station, and the base station transmits data to the mobile station at this data receive interval. In a case where the base station communicates with a number of base stations, the above-mentioned flow control is performed on a per-mobile-station basis.

Further, the base station controller stores data directed toward the mobile station in a buffer on a per-mobile-station basis, performs monitoring to determine whether data occupancy (amount of data) of the buffer on a per-mobile-station basis has exceeded a predetermined threshold value, and starts flow control irrespective of processing timing if the threshold value is exceeded.

Further, the base station controller changes the data receive interval of the mobile station dynamically on a per-mobile-station basis in accordance with a change in communication conditions, e.g., number of times the mobile station has moved from one cell to another, communication quality, etc.

In accordance with the present invention, data flow control between a base station controller and a base station and sending/receiving of data between a base station and a mobile station can be carried out at the same time. As a result, transmission band and computation resources are no longer wasted.

In accordance with the present invention, it is so arranged that if the amount of mobile-station-directed data that has accumulated in a buffer increases, a base station controller performs flow control between itself and a base station and transmits data to the base station. This is advantageous in terms of apparatus size and cost because it is no longer necessary to install a large buffer.

In accordance with the present invention, the data receive interval of the mobile station is changed dynamically on a per-mobile-station basis in accordance with a change in communication conditions, e.g., number of times the mobile station has moved from one cell to another, communication quality, etc. As a result, optimum data flow control can be carried out for every mobile station.

### Brief Description of the Drawings

Fig. 1 is a diagram showing the general configuration of a communication system according to the present invention;
Fig. 2 is a diagram showing the structure of a base station controller (RNC) having the components of a flow control execution unit;
Fig. 3 is a diagram showing the structure of a base station (Node B) having the components of a flow control execution unit / radio transceiver;
Fig. 4 is a processing sequence of flow control by a base station controller (RNC);
Fig. 5 illustrates processing for flow control between an RNC and Node B;
Fig. 6 illustrates processing for data transfer between Node B and UE;
Fig. 7 is a diagram useful in describing transmit processing according to the present invention;
Fig. 8 is a first processing flowchart for updating a minimum receive interval (data receive interval) of each UE;
Fig. 9 is a second processing flowchart for updating a minimum receive interval (data receive interval) of each UE;
Fig. 10 is a schematic view of the configuration of an HSDPA system;
Fig. 11 is a diagram useful in describing a mechanism for receiving packet data on an HS-PDSCH;
Fig. 12 is a diagram useful in describing an overview of a flow control mechanism;
Fig. 13 is a diagram useful in describing characteristic parameters of a capacity-request cell (data-transfer requesting cell);
Fig. 14 is a diagram useful in describing characteristic parameters of a capacity allocation cell (data-transfer enable cell);
Fig. 15 illustrates a processing sequence in a case where a capacity-request processing start-up period of an RNC is shorter than an HS-PDSCH minimum receive interval of UE; and
Fig. 16 illustrates a processing sequence in a case where a capacity-request processing start-up period of an RNC is longer than an HS-PDSCH minimum receive interval of UE.

### Best Mode for Carrying Out the Invention

### (A) Overall communication system

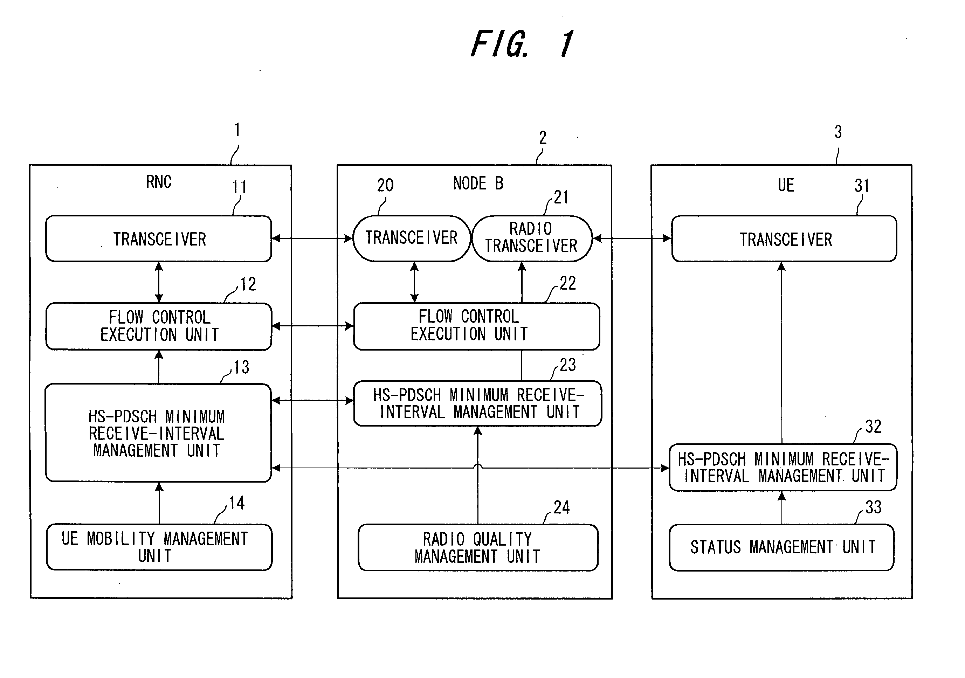

Fig. 1 is a diagram showing the general configuration of a communication system according to the present invention. The diagram illustrates the functions of nodes and the paths of logical information exchange among these functions.

### ·Base station controller (RNC)

A base station controller (RNC) 1 is equipped with at least a transceiver 11, a flow control execution unit 12, an HS-PDSCH minimum receive-interval management unit 13 and a UE mobility management unit 14. The transceiver 11 executes processing for sending and receiving packet data to and from a base station 2 based upon flow control.

The flow control execution unit 12 performs flow control between itself and the base station (Node B) 2 on a per-mobile-station basis and exercises control in such a manner that packet data of each mobile station received from a core network (CN) is transmitted to the base station. Flow control refers to control for transmitting a data-transfer request (capacity request) frame to the base station when it is desired to transmit data to Node B 2, receive a data-transfer enable (capacity allocation) frame sent from the Node B 2 in response to the data-transfer request frame, and transmit data, which has been stored in a buffer, based upon the data-transfer enable frame.

The flow-control start-up processing timing is decided based upon the minimum receive interval, which is specified for every mobile station, from the HS-PDSCH minimum receive-interval management unit 13. If the HS-PDSCH minimum receive-interval management unit 13 has updated the HS-PDSCH minimum receive interval of the mobile station, then reference is had to the updated HS-PDSCH minimum receive interval and flow control is continued. Further, the flow control execution unit 12 stores packet data, which is directed toward each mobile station and is received from the core network (CN), in a buffer. When the amount of data accumulated in the buffer exceeds a threshold value, however, the flow control execution unit 12 starts flow control.

The HS-PDSCH minimum receive-interval management unit 13 has means for updating and then storing the minimum transmit interval of the HS-PDSCH for every mobile station (UE) 3. That is, in response to a change request from the UE mobility management unit 14, or upon receiving a request to change the HS-PDSCH minimum receive interval from the mobile station (UE) 3 or base station (Node B) 2, the HS-PDSCH minimum receive-interval management unit 13 updates and saves the value of the HS-PDSCH minimum receive interval of the UE 3. Further, if the HS-PDSCH minimum receive-interval management unit 13 updates the value of the HS-PDSCH minimum receive interval of the UE 3, it reports the value to the UE 3 and Node B 2 and notifies the flow control execution unit 12 of the fact that the value has changed.

The UE mobility management unit 14 monitors the travel of the UE 3 and performs management based upon an application message. If a certain UE satisfies prescribed conditions, it requests the HS-PDSCH minimum receive-interval management unit 13 to change the HS-PDSCH minimum receive interval of the corresponding UE. For example, the UE mobility management unit 14 manages control information relating to travel of the UE 3, monitors the frequency of handover or the frequency of position registration or the frequency of cell update, determines based upon these frequencies whether it is necessary to change the data receive interval of the UE 3, and requests the HS-PDSCH minimum receive-interval management unit 13 to make a change if it is necessary to change the HS-PDSCH minimum receive interval.

The application message between the RNC 1 and UE 3, the request to change the minimum receive interval and the notification of updating are sent and received using the dedicated control channel ⑤ in Fig. 10. Further, the request to change the minimum receive interval between the RNC 1 and Node B 2 and the notification of updating are performed via the control channel ⑥ between the RNC and Node B.

### ·Base station (Node B)

The base station (Node B) 2 is equipped with at least a transceiver 20, a radio transceiver 21, a flow control execution unit 22, a HS-PDSCH minimum receive-interval management unit 23 and a radio quality management unit 24.

The transceiver 20 executes processing to send and receive packet data to and from the base station controller (RNC) 1 based upon flow control. The radio transceiver 21 holds the data receive interval (minimum receive interval) on the HS-PDSCH of each mobile station (UE) 3 and transmits packets to the mobile station wirelessly based upon the data receive interval.

The flow control execution unit 22 saves the packet data, which is received from the RNC 1 and directed toward each mobile station, in a buffer. Further, the flow control execution unit 22 has function for sending back a data-transfer enable (capacity allocation) frame in response to the data-transfer request (capacity request) frame received from the RNC 1. That is, when it receives the data-transfer request frame, which relates to a prescribed base station, from the RNC 1, the flow control execution unit 22 sends the RNC 1 the data-transfer enable frame that allows data transfer of a prescribed amount of data based upon the availability status of the buffer of this mobile station.

The HS-PDSCH minimum receive-interval management unit 23 updates and stores the HS-PDSCH minimum receive interval for every UE 3. That is, based upon a change request from the radio quality management unit 24, the HS-PDSCH minimum receive-interval management unit 23 requests the HS-PDSCH minimum receive-interval management unit 13 of the RNC 1 to change the HS-PDSCH minimum receive interval of the applicable UE 3. Then, based upon a command to change the minimum receive interval from the HS-PDSCH minimum receive-interval management unit 13, the HS-PDSCH minimum receive-interval management unit 23 updates and stores the HS-PDSCH minimum receive interval of the applicable UE. Further, if it updates the value of the HS-PDSCH minimum receive interval of the UE 3, then the HS-PDSCH minimum receive-interval management unit 23 notifies the radio transceiver 21 of the fact that the value has changed.

The radio quality management unit 24 monitors and manages the radio quality of every UE and, if the radio quality of a certain UE satisfies prescribed conditions, the radio quality management unit 24 notifies the HS-PDSCH minimum receive-interval management unit 23 so as to change the HS-PDSCH minimum receive interval of the UE.

### ·Mobile station (UE)

The mobile station (UE) 3 is equipped with at least a transceiver 31, an HS-PDSCH minimum receive-interval management unit 32 and a status management unit 33.

At the HS-PDSCH minimum receive interval, the transceiver 31 executes processing for sending and receiving packet data and other data. The HS-PDSCH minimum receive-interval management unit 32 updates and stores its own HS-PDSCH minimum receive interval. That is, based upon a change request from the status management unit 33, the HS-PDSCH minimum receive-interval management unit 32 requests the HS-PDSCH minimum receive-interval management unit 13 of the RNC 1 to change its own HS-PDSCH minimum receive interval. Then, based upon a command to change the minimum receive interval from the HS-PDSCH minimum receive-interval management unit 13, the HS-PDSCH minimum receive-interval management unit 32 updates and stores the HS-PDSCH minimum receive interval. Further, if it updates the value of the HS-PDSCH minimum receive interval, then the HS-PDSCH minimum receive-interval management unit 32 notifies the radio transceiver 31 of the fact that the value has changed.

The status management unit 33 monitors and manages its own status and, if its own status satisfies prescribed conditions, notifies the HS-PDSCH minimum receive-interval management unit 32 so as to change the HS-PDSCH minimum receive interval.

### (B) Flow control execution unit of RNC

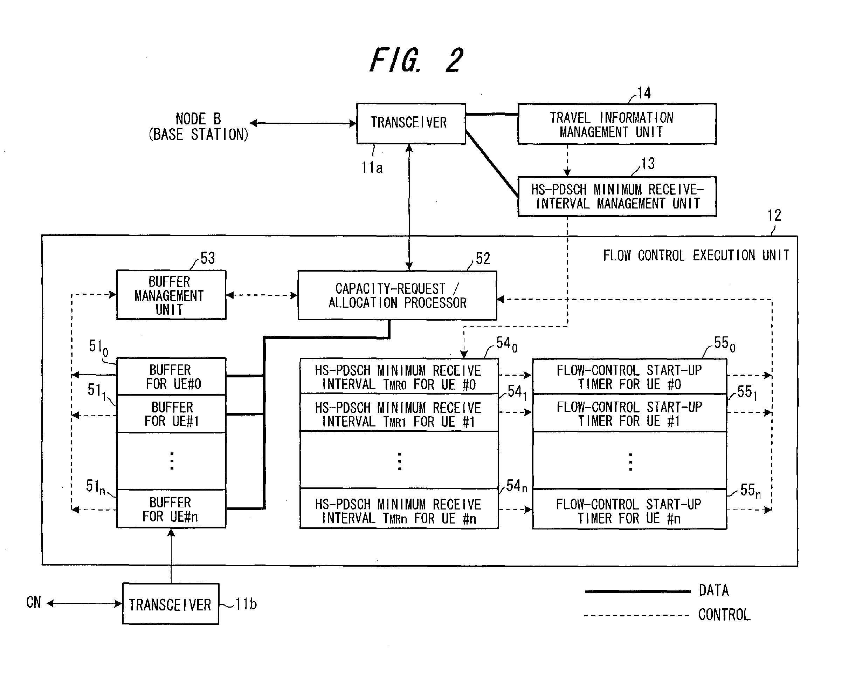

Fig. 2 is a diagram showing the structure the a base station controller (RNC) 1 having the components of a flow control execution unit. Components identical with those of Fig. 1 are designated by like reference characters. The transceiver 11 is divided into a transceiver 11a for sending and receiving frames to and from base station (Node B), and a transceiver 11b for sending and receiving packets to and from the core network CN.

The flow control execution unit 12 exercises flow control between itself and Node B with respect to packet data received from the CN via the transceiver 11b. Flow-control start-up processing timing is based upon the minimum receive interval specified for every UE by the HS-PDSCH minimum receive-interval management unit 13. Furthermore, the flow control execution unit 12 has a function whereby if the HS-PDSCH minimum receive interval has been updated, reference is had to the updated minimum receive interval and flow control is continued. Each block in the flow controller will now be described.

Buffers 51₀ to 51ₙ store, for every mobile station, packet data received from the core network CN and destined for each mobile station. If packet data directed toward each mobile station has been buffered in the buffers 51₀ to 51ₙ on a per-mobile-station basis, a data-transfer request / enable processor (capacity request / allocation processor) 52 generates a data-transfer request frame (capacity-request frame) at a prescribed timing and transmits the frame to the Node B 2 via the transceiver 11a. Further, if it has received a data-transfer enable frame (capacity-allocation frame) from Node B 2, the capacity-request / allocation processor 52 notifies a buffer management unit 53 of the number of items of data whose transmission has been allowed by the frame.

The buffer management unit 53 monitors the status of the buffers at all times. That is, the buffer management unit 53 manages threshold values of the buffers 51₀ to 51ₙ on a per-mobile-station basis, performs monitoring to determine whether data occupancy (amount of data) in the buffer of a certain mobile station has exceeded a predetermined value and, if the threshold value has been exceeded, requests the capacity-request / allocation processor 52 to start up processing for transmitting a capacity-request frame.

Further, if it receives notification of the number of items of data allowed for transmission from the capacity-request / allocation processor 52 with regard to a prescribed mobile station, the buffer management unit 53 extracts the specified number of items of data from a data buffer 51ⱼ conforming to this mobile station and executes transmit processing (delivers the data to the transceiver 11a).

HS-PDSCH minimum receive interval registers 54₀ to 54ₙ store HS-PDSCH minimum receive intervals T_{MR0} to T_{MRn} of every UE. The HS-PDSCH minimum receive intervals T_{MR0} to T_{MRn} are used as flow-control start-up timer values and the values are updated by control executed by the HS-PDSCH minimum receive-interval management unit 13.

Flow-control start-up timers 55₀ to 55ₙ are provided for each of the UEs and use, as timer values, the values of the HS-PDSCH minimum receive intervals T_{MR0} to T_{MRn} that have been stored in the HS-PDSCH minimum receive interval registers 54₀ to 54ₙ. The flow-control start-up timers 55₀ to 55ₙ instruct the capacity-request / allocation processor 52 to execute flow control whenever elapsed time becomes equal to the timer value, and then initialize the elapsed time. It can be so arranged that when a minimum receive interval TMRᵢ has been set in flow-control start-up timer 55ᵢ as a timer value and the timer value has been decremented down to zero, execution of flow control is instructed on the grounds that time-out has occurred.

The HS-PDSCH minimum receive-interval management unit 13 manages the HS-PDSCH minimum receive interval on a per-UE basis, receives a request to change the HS-PDSCH minimum receive interval from the UE mobility management unit 14, Node B 2 or UE 3 and updates the value of the HS-PDSCH minimum receive interval of this UE.

The travel information management unit 14 has a function for monitoring the travel of the UE 3 and performing management based upon an application message. If a certain UE satisfies prescribed conditions, it requests the HS-PDSCH minimum receive-interval management unit 13 to change the HS-PDSCH minimum receive interval of the corresponding UE.

The transceiver 11a terminates all data sent and received between the RNC 1 and base station 2. Packet data and an accompanying flow control frame (capacity-request / allocation frame) or application message (a request to change the minimum receive interval) on a dedicated control channel also are sent and received via the transceiver 11a.

### (C) Flow control execution unit and radio transceiver of Node B

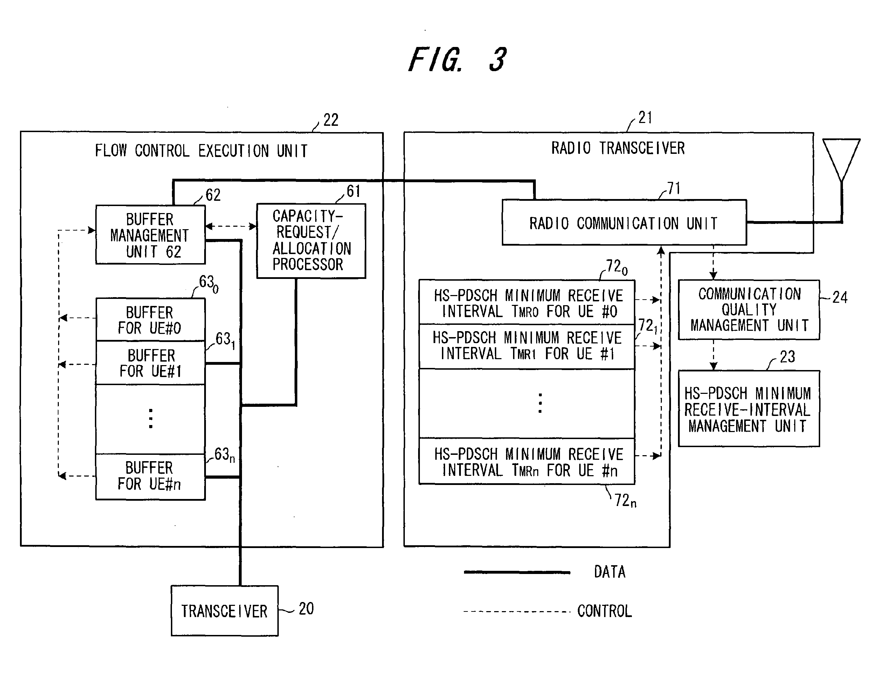

Fig. 3 is a diagram showing the structure of the base station (Node B) 2 having the components of the flow control execution unit / radio transceiver. Components identical with those of Fig. 1 are designated by like reference characters.

The flow control execution unit 22 has a function for exercising flow control between itself and the RNC 1 as well as a function for storing transmit data (packet data), which is directed toward each UE, in buffers 63₀ to 63ₙ temporarily, and transfers the transmit data of each UE 3 to the radio transceiver 21.

If a capacity-request frame is received from the RNC 1, a data-transfer request / enable processor (capacity request / allocation processor) 61 queries a buffer management unit 62 and acquires the number of items of data allowed for transmission, generates a capacity-allocation frame that includes the number of items of data allowed for transmission and transmits the frame to the RNC 1 via the transceiver 20.

The buffer management unit 62 monitors the status of the buffers 63₀ to 63ₙ, which temporarily store the data directed toward each of the UEs, at all times. That is, when a query regarding number of items of data allowed for transmission enters from the capacity-request /allocation processor 61, the buffer management unit 62 investigates the buffer status of the applicable UE, decides, in accordance with the availability status of the buffer, the number of items of data allowed for transmission and reports this to the capacity-request /allocation processor 61. Further, the buffer management unit 62 also has a function for delivering the data in the buffers 63₀ to 63ₙ to the radio transceiver 21.

The radio transceiver 21 is a functional unit for actually performing wireless communication with each UE 3. A radio communication unit 71 wirelessly transmits packet data of each UE delivered from the buffer management unit 62 of the flow control execution unit to the UE at the minimum receive interval. The radio communication unit 71 refers to data receive intervals TMr₀ to TMRₙ of each of the UEs being held in HS-PDSCH minimum receive interval registers 72₀ to 72ₙ and performs communication while assuring the minimum receive interval of each UE. The UE 3 notifies the communication quality management unit 24 of communication quality information (ACK, NACK) receives via the HS-PDSCH ④ in Fig. 10. The HS-PDSCH minimum receive interval registers 72₀ to 72ₙ manage and store the data receive intervals TMr₀ to TMRₙ on a per-UE basis. These are referred to by the radio communication unit 71 and the values are updated by the HS-PDSCH minimum receive-interval management unit 23.

On the basis of communication quality information (ACK, NACK) reported by the radio communication unit 71, the communication quality management unit 24 determines whether it is necessary to change the HS-PDSCH minimum receive interval. If it is determined that a change is necessary, the communication quality management unit 24 uses the control channel ⑥ (see Fig. 10 between the RNC and Node B and reports the change request to the RNC 1.

The processing for changing the receive interval can be implemented as set forth below.

The ratio of NACK (reception failure) in the communication quality information (ACK, NACK) received within a unit of time is compared with two types of threshold values (upper and lower limits), the minimum receive interval is enlarged if the ratio is greater than the upper-limit threshold value) (i.e., if quality is low), and the minimum receive interval is reduced if the ratio is less than the lower-limit threshold value) (i.e., if quality is high). The amount of change in the minimum receive interval can be specified as a multiple n (where n is an integer) of the TTI (2 ms).

The HS-PDSCH minimum receive-interval management unit 23 manages the minimum receive interval of the HS-PDSCH on a per-UE basis, receives a request to change the HS-PDSCH minimum receive interval from the communication quality management unit 24 and updates the value of the HS-PDSCH minimum receive interval of the applicable UE held in the HS-PDSCH minimum receive interval registers 72₀ to 72ₙ. In actuality, the change request is sent to the RNC 1 and the HS-PDSCH minimum receive interval registers 72₀ to 72ₙ are updated after notification of updating is received from the RNC 1.

The transceiver 20 terminates all data sent and received between the Node B 2 and RNC 1. Packet data and an accompanying flow control frame (capacity-request /allocation frame) or control message (a request to change the minimum receive interval) between the RNC and Node B also are sent and received via the transceiver 20.

### (D) Flow-control processing sequence

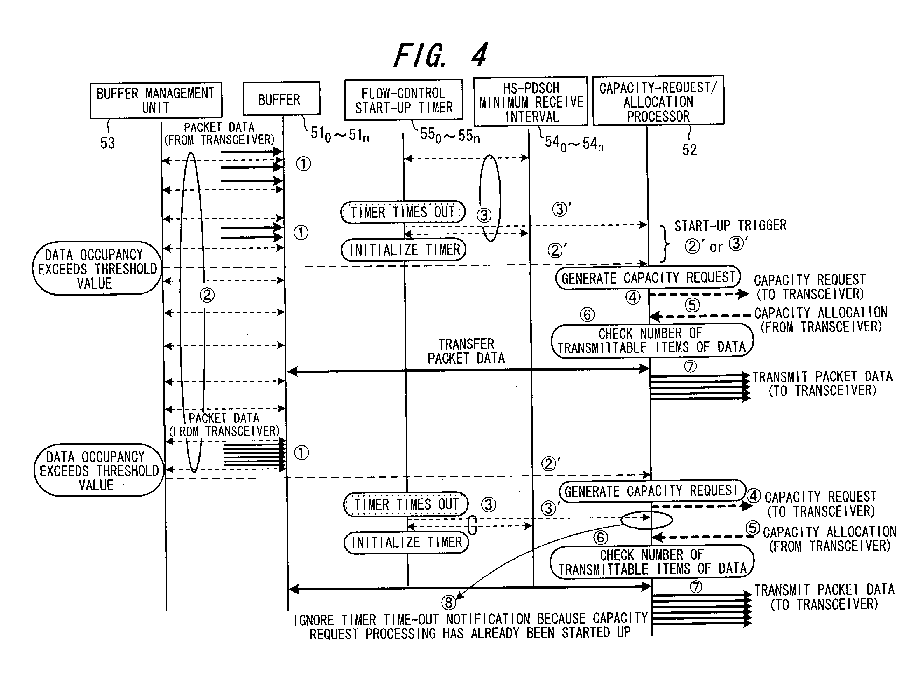

Fig. 4 is the processing sequence of flow control in the base station controller (RNC).

Packet data from the CN received from the transceiver 11b is stored in the buffers 51₀ to 51ₙ on a per-UE basis (step ①).

The buffer management unit 53 monitors the data occupancy (amount of accumulated data) in the buffers at all times (step ②). If it is detected that the buffer occupancy has exceeded a predetermined threshold value, the buffer management unit 53 immediately so notifies the capacity-request / allocation processor 52 and triggers start-up of flow control (step ②').

In parallel with the foregoing, the flow-control start-up timers 55₀ to 55ₙ are started up independently on a per-UE basis and measure elapsed time. Reference is had to the HS-PDSCH minimum receive interval and monitoring is performed to determine whether elapsed time has reached the HS-PDSCH minimum receive interval (step ③ ). If the elapsed time has reached the HS-PDSCH minimum receive interval, then the capacity-request /allocation processor 52 is so notified and start-up of flow control is triggered (step ③'). Further, the measured time is initialized and start-up is performed again from zero. When a timer runs out of time, it is possible to start up flow control periodically in a form that falls in line with the HS-PDSCH minimum receive interval up on a per-UE basis in the manner described above.

If a trigger to start up flow control is generated by step ②' or ③', the capacity-request / allocation processor 52 detects the flow-control start-up trigger. In response, the capacity-request / allocation processor 52 passes buffer status between itself and the buffer management unit 53, creates a capacity-request frame based upon this information and transmits it to Node B 2 (step ④).

Upon receiving a capacity-allocation frame from the Node B 2 (step ⑤), the capacity-request / allocation processor 52 checks the number of items of packet data allowed for transmission (step ⑥ ), extracts this number of items of transmit packet data from the buffers 51₀ to 51ₙ and transmits the data to Node B 2 (step ⑦).

It should be noted that even if the flow-control start-up period is attained (i.e., even if the start-up period timer times out) in a state in which the flow-control processing has been started up owing to the fact that the data occupancy in the buffer has exceeded the prescribed value, new flow control based upon this start-up period is not started up because flow control has already been carried out (step ⑧).

If, when a start-up trigger is produced owing to time-out of a timer of a prescribed UE, data does not exist in the buffers 51₀ to 51ₙ that conforms to this UE (i.e., if the number of items of data for which transmission is requested is equal to zero), a capacity-request frame is not transmitted, thereby preventing pressure on the transmission band.

Further, owing to the existence of a plurality of flow-control start-up periods, there is the danger that capacity-request frames will be transmitted frequently. Accordingly, a guard time is provided on a per-user basis and protection is furnished in such a manner that two or more capacity-request frames will not be transmitted in the guard time. This control method is capable of being implemented by providing a timer for every user.

### (E) Flow control between RNC and Node B

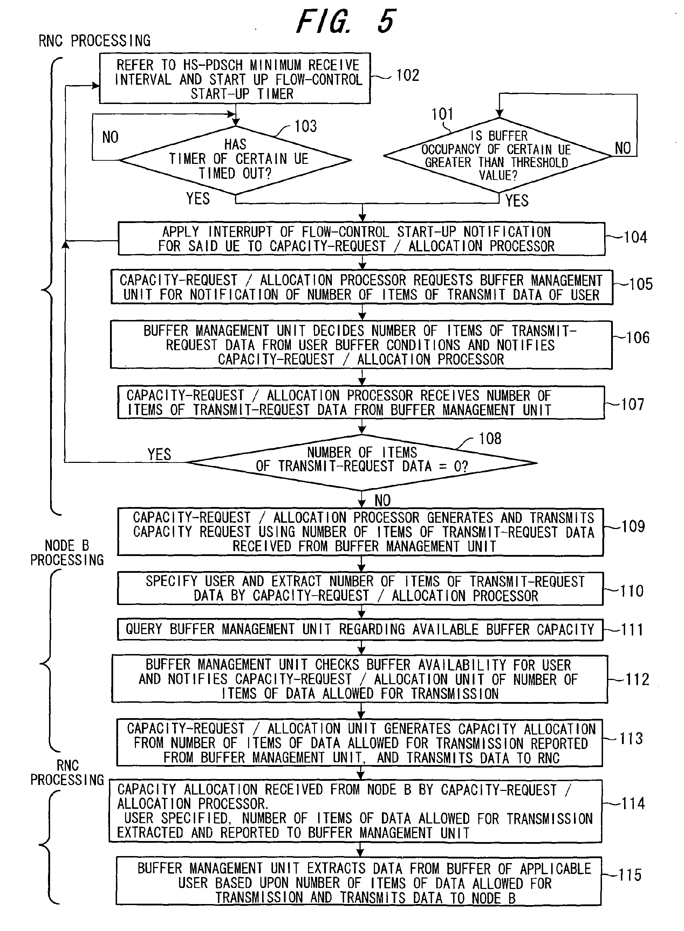

Fig. 5 illustrates processing for flow control between the RNC and Node B. It should be noted that steps 101 to 108 in Fig. 5 have already been explained in accordance with the sequence of Fig. 4 and need not be described again. That is, what is described below is processing that follows the generation and transmission of the capacity-request frame by the RNC 1.

If it receives a capacity-allocation frame from the RNC 1, the capacity-request / allocation processor 61 of Node B 2 (see Fig. 3) specifies the mobile station UE from the received capacity-allocation frame and checks the number of items of data requested for transmission (step 110). Next, the capacity-request / allocation processor 61 queries the buffer management unit 62 concerning the amount of available buffer for the applicable mobile station UE (step 111).

The buffer management unit 62 checks the amount of available buffer for the mobile station UE, decides the number of items of data allowed for transmission and notifies the capacity-request / allocation processor 61 of the number of items of data allowed for transmission with regard to the UE (step 112).

On the basis of the number of transmittable items of data reported by the buffer management unit 62, the capacity-request / allocation processor 61 generates a capacity-allocation frame and sends it back to the RNC 1 via the transceiver 20.

Upon receiving the capacity-allocation frame from the Node B 2, the capacity-request / allocation processor 52 of RNC 1 specifies the mobile station (user), extracts the number of items of data allowed for transmission and so notifies the buffer management unit 62 (step 114). On the basis of the number of transmittable items of data reported, the buffer management unit 62 reads a packet out of the buffer of the applicable UE and transmits it to the Node B 2 via the transceiver 11a (step 115). Upon receiving the packet data from the RNC 1, the Node B 2 stores the data in the buffer of the applicable mobile station UE.

### (F) Processing for transferring data between Node B and UE

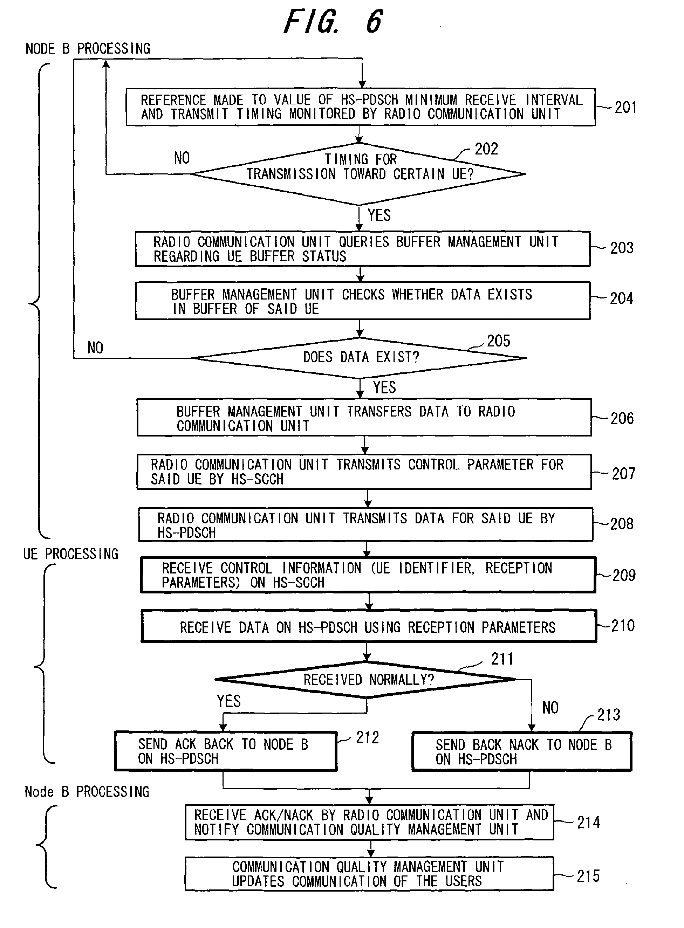

Fig. 6 illustrates processing for data transfer between Node B and a UE.

Following the processing of step 115 in Fig. 5, the radio transceiver 21 of Node B 2 makes preparations constantly for a transmission to each UE using the HS-PDSCH minimum receive interval of each UE as a reference (step 201). When a certain UE reaches the receive timing (step 202), the radio communication unit 71 queries the buffer management unit 62 concerning the buffer status of this UE (step 203). The buffer management unit 62 checks to see whether data exists in the buffer of this UE (step 204) and repeats the processing from step 201 onward if data is absent. If data exists in the buffer, on the other hand, the buffer management unit 62 transfers this data to the radio communication unit 71 (step 206). The radio communication unit 71 transmits control data to this UE via the HS-SCCH (step 207) and transmits packet data wirelessly via the HS-PDSCH (step 208).

The UE 3 receives the control data via the HS-SCCH (step 209) and receives the packet data via the HS-PDSCH (step 210) using the reception parameters (radio spread-spectrum, modulation scheme and data-length information, etc.) contained in the control data.

The UE 3 performs monitoring to determine whether the data has been received normally (step 211) and transmits ACK (verification of normal reception) to Node B 2 via the HS-PDSCH (step 212) if the data has been received normally. If the data has not been received normally, the UE 3 transmits NACK (failure of data reception) to the Node B 2 via the HS-PDSCH (step 213).

Node B 2 transfers the ACK/NACK information to the communication quality management unit 24 via the radio communication unit 71 (step 214), and the communication quality management unit 24 retains the ACK/NACK information as radio quality information and uses the information in subsequent feedback processing (specifically, in processing for changing the HS-PDSCH minimum receive interval) (step 215).

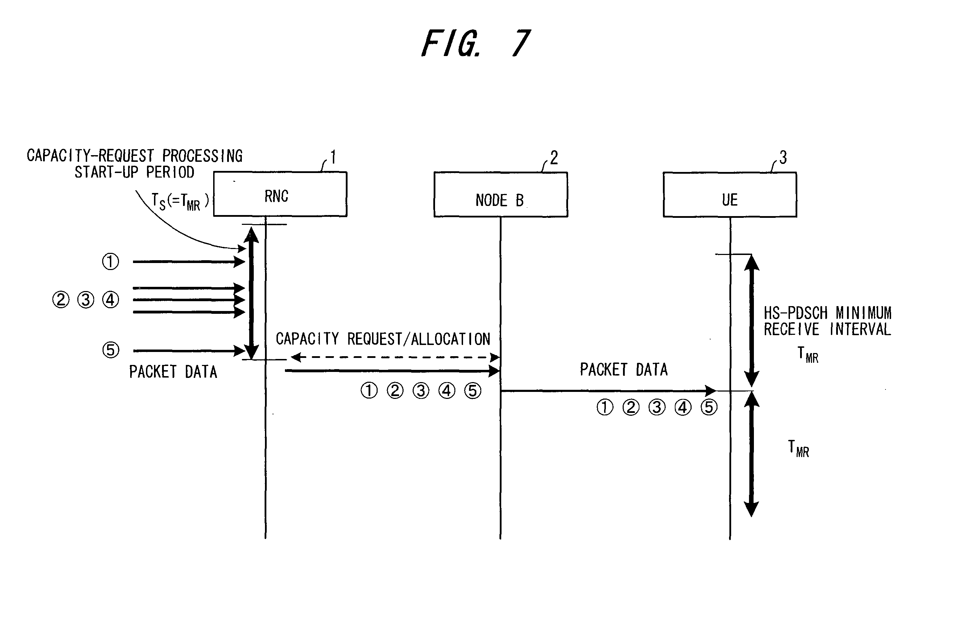

In the present invention, a series of transmit processing operations (flow control between RNC and Node B and data transfer between Node B and UEs) is performed at a timing that falls in line with HS-PDSCH minimum receive interval T_{MR} of UE 3, as illustrated in Fig. 7. As a result, it is evident that in comparison with Figs. 7, 15 and 16, the present invention makes it possible to prevent, to the greatest extent, a delay in data ascribable to unnecessary buffering in RNC 1 and Node B 2 as well as pressure upon the band owing to needless flow control.

### (G) Collateral functions

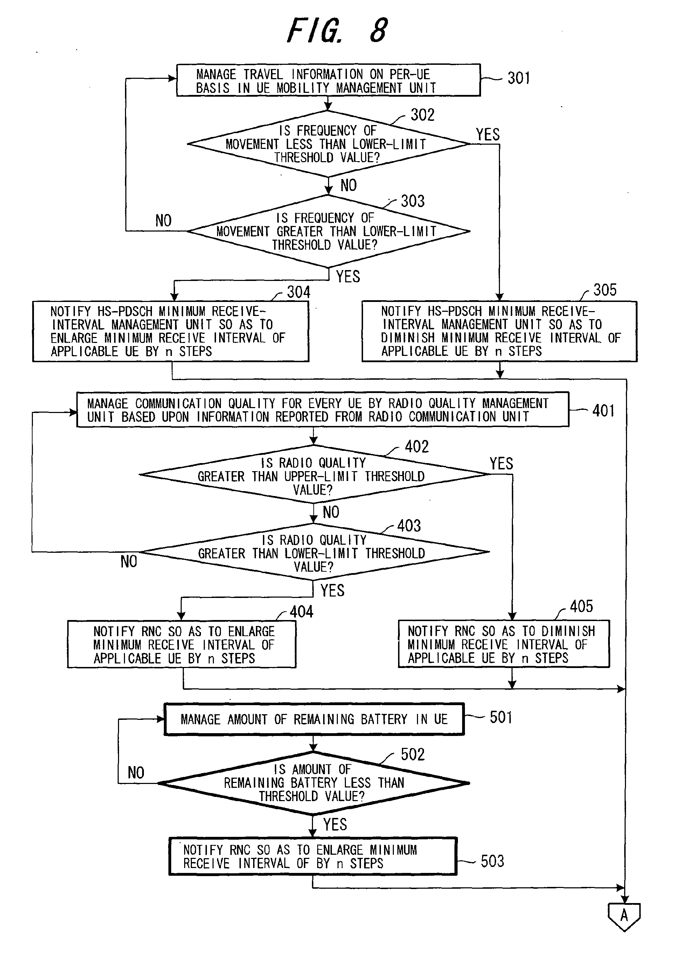

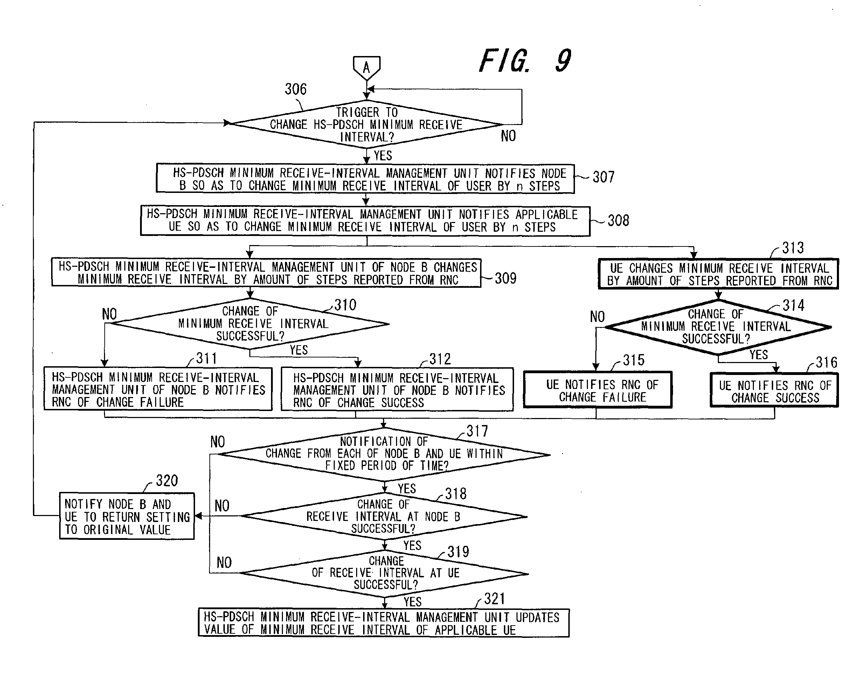

Figs. 8 and 9 are processing flowcharts for updating the minimum receive interval (data receive interval) of each UE.

### ·Method of changing the flow-control start-up period (minimum receive interval) dynamically based upon travel information of UE managed by the RNC:

If the UE 3 moves frequency, it is conceivable that the data reception capability of the UE 3 will decline. The travel information management unit 14 (see Fig. 1) within the RNC 1 stores and manages UE travel information, e.g., frequency of handover and cell updating (step 301). The travel information management unit 14 performs monitoring to determine whether the frequency of handover or cell updating has fallen below a predetermined lower-limit threshold value or exceeded a predetermined upper-limit threshold value (steps 302, 303). If the upper-limit threshold value is exceeded, the travel information management unit 14 requests the HS-PDSCH minimum receive-interval management unit 13 to enlarge the value of the HS-PDSCH minimum receive interval (step 304). If the lower-limit threshold value is exceeded, the travel information management unit 14 requests the HS-PDSCH minimum receive-interval management unit 13 to diminish the value of the HS-PDSCH minimum receive interval (step 305).

The HS-PDSCH minimum receive-interval management unit 13 performs monitoring to determine whether a change in the value of the HS-PDSCH minimum receive interval has been requested (step 306; Fig. 9). If a change has been requested, the HS-PDSCH minimum receive-interval management unit 13 changes the value of the HS-PDSCH minimum receive interval, which is being held in the minimum receive interval register of the applicable UE within the flow control execution unit 12, by increasing or decreasing the value by n steps in accordance with the change request. In addition, the HS-PDSCH minimum receive-interval management unit 13 uses the control channel (see Fig. 10) between the RNC and Node B to notify the Node B 2 that the HS-PDSCH minimum receive interval will be changed (step 307). Furthermore, the HS-PDSCH minimum receive-interval management unit 13 uses the dedicated control channel ⑤ (Fig. 10) to notify the UE 3 that the HS-PDSCH minimum receive interval will be changed (step 308).

The HS-PDSCH minimum receive-interval management unit 23 of Node B 2 changes the HS-PDSCH minimum receive interval by the number of steps reported from the RNC 1 (step 309) and checks to determine whether the change in minimum receive interval has succeeded (step 310). If the change in minimum receive interval has not succeeded, the HS-PDSCH minimum receive-interval management unit 23 notifies the RNC 1 of the change failure (step 311). If the change in the minimum receive interval succeeds, however, the HS-PDSCH minimum receive-interval management unit 23 notifies the RNC 1 of the fact that the change succeeded (step 312).

Further, the HS-PDSCH minimum receive-interval management unit 32 of UE 3 changes the HS-PDSCH minimum receive interval by the number of steps reported from the RNC 1 (step 313) and checks to determine whether the change in minimum receive interval has succeeded (step 314). If the change in minimum receive interval has not succeeded, the minimum receive-interval management unit 32 notifies the RNC 1 of the change failure (step 315). If the change in the minimum receive interval succeeds, however, the minimum receive-interval management unit 32 notifies the RNC 1 of the fact that the change succeeded (step 316).

The HS-PDSCH minimum receive-interval management unit 13 of the RNC 1 performs monitoring to determine whether notification of change success/failure has been received from the Node B 2 and UE 3 within a fixed period of time, whether Node B has succeeded in making the change of the receive interval and whether the UE has succeeded in making the change of the receive interval (steps 317 to 319). If notification of change success/failure has not been received, or if node B has failed in making the change in the receive interval, or if the UE has failed in making the change in the receive interval, then the HS-PDSCH minimum receive-interval management unit 13 instructs Node B 2 and UE 3 to restore the minimum receive interval to the original value (step 320).

On the other hand, if the Node B 2 and the UE 3 succeed in making the change in the receive interval, then the HS-PDSCH minimum receive-interval management unit 13 updates the minimum receive interval of the applicable UE (step 321).

### ·Method of changing the flow-control start-up period (minimum receive interval) dynamically based upon communication-status monitoring information of Node B:

The communication quality management unit 24 (Fig. 1) of the Node B 2 ascertains the wireless communication status of packet data using ACK/NACK information received from the UE 3 via the HS-PDSCH (step 401). The communication quality management unit 24 manages, for every UE, the result of measuring radio communication quality and changes the HS-PDSCH minimum receive interval. That is, if the retransmission frequency of packet data is high and radio quality is less than the lower-limit threshold value ("YES" at step 403), then there is the possibility that receive processing at the UE 3 is not keeping up. In such case the communication quality management unit 24 instructs the HS-PDSCH minimum receive-interval management unit 23 to make a change so as to increase the value of the HS-PDSCH minimum receive interval. As a result, the HS-PDSCH minimum receive-interval management unit 23 requests the minimum receive-interval management unit 13 of RNC 1 to make a change so as to increase the value of the HS-PDSCH minimum receive interval by n steps (step 404).

On the other hand, if the retransmission frequency of packet data is low and radio quality is greater than the upper-limit threshold value ("YES" at step 402), then receive processing at the UE 3 is keeping up satisfactorily. In such case the communication quality management unit 24 instructs the HS-PDSCH minimum receive-interval management unit 23 to make a change so as to decrease the value of the HS-PDSCH minimum receive interval. As a result, the HS-PDSCH minimum receive-interval management unit 23 requests the minimum receive-interval management unit 13 of RNC 1 to make a change so as to decrease the value of the HS-PDSCH minimum receive interval by n steps (step 405). Processing from step 306 onward in Fig. 9 is thenceforth executed.

### ·Method of changing the flow-control start-up period (minimum receive interval) dynamically based upon communication-status monitoring information of UE:

In accordance with the communication status, etc., of the UE 3, the UE notifies the RNC 1 of the trigger that changes the HS-PDSCH minimum receive interval. A dedicated control channel is used as the method of notification. For example, it is considered useful to monitor the amount of remaining battery in the UE 3 (step 501) and, if there is little battery remaining, to extend the data receive interval in order to suppress power consumption. In this case, the amount of remaining battery is managed by the status management unit 33 (see Fig. 1). If the amount of remaining battery falls below a predetermined threshold value (step 502), then the status management unit 33 instructs the HS-PDSCH minimum receive-interval management unit 32 to make a change so as to increase the minimum receive interval by n steps. In response, the minimum receive-interval management unit 32 requests the minimum receive-interval management unit 13 of RNC 1 to make a change so as to increase the value of the HS-PDSCH minimum receive interval by n steps (step 503). Processing from step 306 onward in Fig. 9 is thenceforth executed.

As set forth above, the value of the minimum receive interval is changed based upon the amount of remaining battery. However, the value can also be changed based upon communication quality or communication rate. That is, in general the UE 3 measures the communication quality. It is possible to use a dedicated control channel to notify the RNC to implement a threshold-value judgment based upon the measured reception quality, increase the minimum receive interval by n steps if the reception quality has declined and decrease the minimum receive interval by n steps if the reception quality has improved.

Further, in general the UE 3 measures the communication rate. It is possible to use a dedicated control channel to notify the RNC to implement a threshold-value judgment based upon the measured communication rate, increase the minimum receive interval by n steps if the communication rate is low and decrease the minimum receive interval by n steps if the communication rate is high. This makes it possible to prevent needless consumption of power when communication is performed at a low rate.

### (H) Effects of the present invention

A very important problem that will accompany speed-up of packet transmission rate in the future is how to use limited resources (transmission band, buffer memory, computation resources, etc.). In accordance with the present invention, attention is actually directed toward the reception operation of a UE, which is the terminus of packet data, and flow control processing is started up on the RNC side in accordance with the period at which the UE is capable of receiving data. Flow control is performed independently with respect to a plurality of UEs. Furthermore, it is also possible to change the period of flow-control start-up dynamically in accordance with various communication environments. As a result, it is possible to maintain an optimum state for communication at all times without lowering the throughput of the packet data in terms of the overall system. It is believed that this will also lead to an improvement in communication quality. Furthermore, because it is possible to exercise flow control with the minimum necessary amount of processing and to optimize efficiency of buffer use in an RNC and Node B, it is possible to reduce the apparatus size (amount of buffer and number of processing blocks) and cost for both the RNC and Node B. As a result, this leads to a decline in communication cost.

## Claims

1. A flow control method of controlling flow between a base station controller and base station in a wireless communication network that includes a base station controller, a base station and a mobile station, **characterized by** comprising:
sending and receiving a data-transfer request frame and a data-transfer enable frame between a base station controller and a base station to thereby control flow of data from the base station controller to the base station;
providing each node of a base station controller, base station and mobile station with the same processing timing; and
performing flow control between the base station controller and base station based upon said processing timing, and sending and receiving data between the base station and the mobile station at said processing timing.

2. A flow control method according to claim 1, **characterized in that** said flow control is performed for every mobile station to which the base station transmits data.

3. A flow control method according to claim 2, **characterized in that** the base station controller stores data directed toward the mobile station in a buffer on a per-mobile-station basis, performs monitoring to determine whether data occupancy of said buffer on a per-mobile-station basis has exceeded a predetermined threshold value, and starts said flow control if the threshold value is exceeded.

4. A flow control method according to claim 2 or 3, **characterized in that** the base station controller sets a timer value for every mobile station and, if time-out occurs with regard to a prescribed mobile station, starts said flow control with regard to data directed toward said mobile station.

5. A flow control method according to claim 2, **characterized in that** the base station controller sets a timer value for every mobile station and, when time-out occurs with regard to a prescribed mobile station, examines whether data exists in a buffer corresponding to said mobile station, starts said flow control if the data exists and refrains from starting flow control if the data does not exist.

6. A flow control method according to claim 2 or 3, **characterized in that** the base station controller provides a fixed guard time and exercises control in such a manner that two or more data-transmit request frames will not be transmitted within said guard time.

7. A flow control method according to claim 1, **characterized in that** said processing timing is made a data receive interval of a mobile station; and
the base station controller executes said flow control at said processing timing, thereby making a processing interval of said flow control coincide with said data receive interval of the mobile station.

8. A flow control method according to claim 7, **characterized in that** the base station controller changes the data receive interval of said mobile station dynamically on a per-mobile-station basis in accordance with a change in communication conditions.

9. A flow control method according to claim 8, **characterized in that** a determination to change the data receive interval of said mobile station is implemented by any one of the base station controller, base station and mobile station;
requests to change the data receive interval are compiled in the base station controller; and
the base station controller changes the data receive interval and notifies the base station and mobile station of the data receive interval prevailing after the change.

10. A flow control method according to claim 9, **characterized in that** after notification of the change in the data receive interval has been issued to the base station and mobile station from the base station controller, said base station controller again notifies the base station and mobile station so as to restore the original data receive interval if a change-complete notification message is not received from both said base station and mobile station.

11. A flow control method according to claim 8,
**characterized in that**:
control information relating to travel of the mobile station is managed by the base station controller; and
the base station controller determines whether it is necessary to change the data receive interval based upon said control information.

12. A flow control method according to claim 11,
**characterized by**:
using handover control information as said control information and monitoring handover frequency of the mobile station; and
determining to enlarge the data receive interval if the handover frequency is greater than a predetermined threshold value, and determining to reduce the data receive interval if the handover frequency is less than the predetermined threshold value.

13. A flow control method according to claim 11,
**characterized by**:
using control information, which includes information indicating movement of the mobile station between cells, as said control information and monitoring frequency of position registration or of cell updating; and
determining to enlarge the data receive interval if said frequency is greater than a predetermined threshold value, and determining to reduce the data receive interval if said frequency is less than the predetermined threshold value.

14. A flow control method according to claim 11,
**characterized in that**:
quality of communication between the base station and mobile station is managed by the base station; and
the base station determines whether it is necessary to change the data receive interval of the mobile station based upon said communication quality information.

15. A flow control method according to claim 9,
**characterized in that**:
the mobile station manages amount of remaining battery; and
the mobile station determines whether it is necessary to change the data receive interval based upon the amount of remaining battery.

16. A flow control method according to claim 9,
**characterized in that**:
the mobile station manages communication quality; and
the mobile station determines whether it is necessary to change the data receive interval based upon said communication quality.

17. A flow control method according to claim 9,
**characterized in that**:
the mobile station manages communication rate; and
the mobile station determines whether it is necessary to change the data receive interval based upon said communication rate.

18. A base station controller in a wireless communication network that includes at least a base station controller, a base station and a mobile station, **characterized by** comprising:
a buffer for storing data, which is directed toward the mobile station, received from a core network;
a flow controller for exercising control that includes transmitting a data-transfer request frame to the base station when it is desired to transmit data to the base station, receiving a data-transfer enable frame that is transmitted from the base station in response to said data-transfer request frame, and transmitting data, which has been stored in said buffer, to the base station based upon said data-transfer enable frame;
a transceiver for sending and receiving a data frame and each control frame to and from the base station; and
a first flow-control start-up unit for causing said flow control to be executed at a data receive interval of the mobile station.

19. A base station controller according to claim 18, **characterized in that** said first flow-control start-up unit has means for causing said flow control to be executed at a data receive interval on a per-mobile-station basis.

20. A base station controller according to claim 18, **characterized by** comprising:
a buffer for storing data, which is directed toward the mobile station, on a per-mobile-station basis;
a data monitoring unit for performing monitoring to determine whether data occupancy of said buffer on a per-mobile-station basis has exceeded a predetermined threshold value; and
a second flow-control start-up unit which, if data occupancy of a prescribed mobile station exceeds the threshold value, is for causing said flow control to be executed in relation to said mobile station.

21. A base station controller according to claim 20, **characterized by** comprising a flow-control execution interval controller for changing a data receive interval of said mobile station in accordance with a change in communication conditions, thereby changing timing at which said flow control is executed.

22. A base station in a wireless communication network that includes at least a base station controller, a base station and a mobile station, **characterized by** comprising:
a buffer for storing data, which is directed toward each mobile station, received from the base station controller;
a transmitter for transmitting data, which has been stored in a buffer conforming to said mobile station, to the mobile station at a data receive interval of each mobile station; and
a transceiver for sending and receiving a data frame and each control frame to and from the base station controller.

23. A base station according to claim 22, **characterized by** comprising:
a communication quality management unit for managing communication quality between the base station and mobile station; and
a data receive interval change monitoring unit for determining whether it is necessary to change the data receive interval of said mobile station based upon communication quality information and so notifying the base station controller;
wherein said transmitter transmits data, which has been stored in said buffer, to the mobile station based upon a data receive interval specified by the base station controller.
